**Europäisches Patentamt**

(19) **European Patent Office**

**Office européen des brevets**

(11) Publication number : **0 379 261 B1**

(12) # EUROPEAN PATENT SPECIFICATION

(45) Date of publication of patent specification :
**12.05.93 Bulletin 93/19**

(51) Int. Cl.$^5$ : **B09B 5/00,** B01D 11/02,
C02F 9/00

(21) Application number : **90200125.4**

(22) Date of filing : **17.01.90**

(54) **A process for cleaning soil.**

(30) Priority : **17.01.89 NL 8900102**

(43) Date of publication of application :
**25.07.90 Bulletin 90/30**

(45) Publication of the grant of the patent :
**12.05.93 Bulletin 93/19**

(84) Designated Contracting States :
**AT BE CH DE DK ES FR GB GR IT LI LU NL SE**

(56) References cited :
**EP-A- 0 192 285
EP-A- 0 275 096
DE-A- 3 525 701
DE-A- 3 720 833
FR-A- 2 608 628
US-A- 4 713 340**

(73) Proprietor : **TAUW INFRA CONSULT B.V.
Handelskade 11
NL-7417 DE DEVENTER (NL)**

(72) Inventor : **Urlings, Leonardus G.C.M.
Reigerlaan 15
NL-3871 TB Hoevelaken (NL)**

(74) Representative : **de Bruijn, Leendert C. et al
Nederlandsch Octrooibureau
Scheveningseweg 82 P.O. Box 29720
NL-2502 LS Den Haag (NL)**

Jouve, 18, rue Saint-Denis, 75001 PARIS

EP 0 379 261 B1

## Description

The invention relates to a process for the treatment of contaminated soil, wherein the soil to be treated is brought onto an impermeable base in a deposit, in a layer of a thickness of 1 to 2 metres, water or recirculated water, if desired with added nutrients is spread over the soil and from the bottom of the depot water is withdrawn from the soil by means of a drain-system.

Such a process is described in DE-A-3,720,833 disclosing a biological treatment concentrated in soil with no active air extraction from soil and treatment being described. Air is only withdrawn from the top part of the deposit, just under the roof, it is heated and reinjected without treatment. Working of the soil is necessary. To obtain the desired biological treatment inoculation of micro-organisms in the soil to be treated is obligatory. The process uses defined temperature and air humidity ranges. It is described as a deposit as well as a "rotating drum". The temperature used is 15 to 40°C. Air is injected into the soil, withdrawal of air occurs only in the top part of the cover. Working the soil is essential. Further the system is covered.

It is further known to rain soil with water and to withdraw the percolate from the bottom and to withdraw it. In such a process the water soluble components are extracted from the soil. The extraction liquid can of course be subjected to a purification.

It is known to withdraw water percolated through the soil and to subject it to a cleaning.

Although such a system does work, the results obtained are not satisfactory.

Now a process of the above type was found, characterized in that the water withdrawn from the soil is subjected to a biological and/or physical chemical cleaning, an excess of water, if any, is withdrawn and the remainder is supplied to the soil again. If desired, the soil is periodically worked and, if desired, air is injected in the soil or is withdrawn from it.

The cleaning activity by conversion in the soil is promoted by such a process. Further the most mobile contaminants (mostly the most volatile ones) such as aromates, benzene, toluene etc. are washed from the soil by means of the liquid flow. During the starting period a water flux as high as possible is maintained. By recirculation and treatment of the water, the amount of water to be withdrawn is minimised.

The present process differs from the known process in that the present process uses a closed recirculation circuit for water. An excess of water can be purified before it is discarded. The present process thus has no adverse effect on the environment.

A further difference with the known process is that the present process requires no inocculation with special micro-organisms. The installation/deposit requires no cover and the present process can be used with an other process for a combined air/water treatment.

The supply of water to the soil can for instance be performed efficiently by raining or irrigation of the deposit. When the most volatile substances are washed from the contaminated soil, a forced air injection or air withdrawal can stimulate the biological activity in the soil. Further the remaining volatile contaminants can be removed by air withdrawal from the soil.

When air is withdrawn, it is preferred to clean the withdrawn air as well.

According to a beneficial embodiment micro-organisms and/or extracts or detergents are supplied to the recirculated liquid. Thus the conversion of the contamination is promoted.

According to an other beneficial embodiment nitrogen and/or phosphate and/or further nitrogens are supplied to the recirculated water.

The application of a cover over soil to be treated can prevent the access of too much rain.

The conversion of undesired substances in the soil can be promoted by the addition of micro-organisms to the system for instance by addition to the recirculated water.

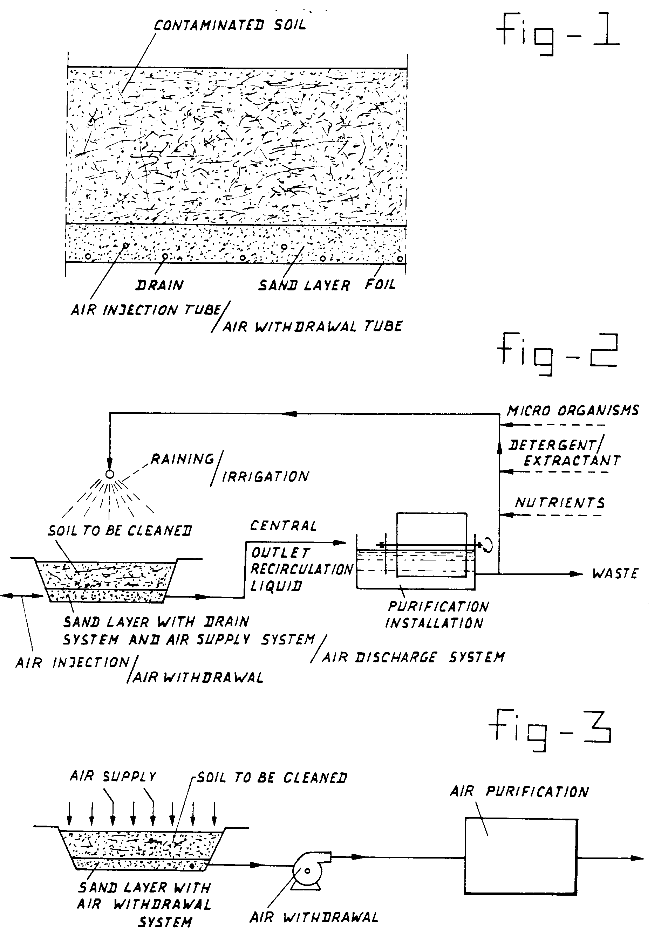

When carrying out the present process, the soil is brought in a deposit in a layer of a thickness of for instance 1 to 2 m. The basis can consist of an impermeable synthetic foil, onto which a layer of sand of about 30 cm is supplied, for instance of 20 to 40 cm, in which a drain system and an air injection system and/or air withdrawal system are present. An example of such a system is given in Fig. 1. If desired, also in a higher level in the layer of contaminated soil, for instance half way the layer, additional means for air injection and/or air withdrawal can be arranged.

The soil can be rained with water, to which nutrients can be added with a raining intensity of 2 to 10 cm per day (of course, the intensity of the raining will be dependent on the type of soil). The percolate is treated in a cleaning device, which consists of a biological system, a physical/chemical system or a combination of both. The liquid can again be spread over the depot, while the excess is drained off (for instance in case of a non covered system this will hold for the excess of rain water). The principle of this process is schematically given in Fig. 2.

It is known that microbiological processes, occurring in the soil, can result in decomposition of contaminants whereas contaminants or its decomposition products are extracted by means of the recirculation water.

The water with its extracted contaminating material is collected by means of a drain system, after which it is led to a cleaning device. This device can consist of a biological purification (for instance bio-rotors or other mud-carry up systems) or a physical chemical purification (for instance deposit, flotation, ion-exchange, resin adsorption, active carbon, stripper) or a combination of these systems. Then the cleaned liquid is once again spread over the depot.

Thus, in such a process both biological processes (in the soil and in the purification device) and physical-chemical processes (extraction of contaminants from the soil, physical-chemical liquid cleaning) are used.

By means of the water flow through the soil there occurs a good contact with the soil, through which microbiological processes are stimulated as well as the washing of contaminants.

The biological decomposition of contaminants in the soil can be accelerated in the process according to the invention by means of the following measures:

- when the soil scarcely comprises certain nutrients, for instance nitrogen or phosphate, such nutrients can be added.

  The nutrients can be added to the recirculation water, however, this can also be performed by admixing the soil to be cleaned for instance with dung or mud, being rich of nitrogen and phosphate.
- when an aerobic decomposition of the contaminants in the soil is preferred, the soil can be aerated by means of the air injection system c.q. an air withdrawal system to decrease the concentration of oxygen in the soil.
- in case of volatile substances as contaminants, air can also be withdrawn, this withdrawn air, then being contaminated, can be cleaned by means of volatile substances.
- by working the soil periodically (for instance by ploughing up) an improvement of the structure of the soil can be achieved through which the biological decomposition of contaminants is improved.
- the biodegradation of the contaminants is stimulated through the addition of micro-organisms. Such an addition may as well occur in the cleaning device as in the soil itself.

  It can be very expedient to add dung or mud to the soil to be cleaned, desired nutrients can be extracted from these components whereas also the dung or mud are cleaned.

  The extraction activity of the liquid recirculation for washing the soil out of impurities, can be improved by:
- working the soil, through which the structure of the soil is changed and new interfaces of soil liquid occur.
- optionally a detergent/extractor is added to the recirculation liquid. Extraction of contamination from the soil is improved herewith and decomposition/removal of the extracted compounds occur in the (liquid) cleaning device.

Both a biologically decomposable extractor and a non-biologically decomposable extractor can be used.

In the final stage of this cleaning process an oxydant can be added to the circulation liquid, for instance nitrogen peroxide, ozon, for promoting chemical and/or biological oxidation.

When the contamination consists wholly or partially of volatile compounds specifically air withdrawal can be applied. Thus air is sucked through the soil, in which volatility of the contaminants occurs, subsequently the air is withdrawn by the air withdrawal system, after which it is treated in a cleaning device (a biological and/or physical-chemical cleaning device). Such a system is drawn in Fig. 3.

Aerating of the contaminated soil, particularly in the deeper parts of the layer, promotes the degradation of for instance oil components.

The process according to the invention is illustrated by means of the following examples, which are not to interprete restrictively.

Example I

Effect aeration (air injection) on degradation of oil contaminants in soil (concentrations in mg/kg soil) - practice test

Period I: no air injection
Period II: air injection

| date | period | depth sampling | | | | | |
|------|--------|----------------|---|---|---|---|---|
| | | 0-3- cm | | 30-60 cm | | 60-90 cm | |
| | | conc.red. | | conc. red. | | conc. red. | |
| 12-6-87 | | 15,0000 | – | 20,000 | – | 15,000 | |
| | I: no air injection | | | | | | |
| 24-5-88 | | 2,600 | 83% | 12,000 | 40% | 16,000 | 0% |
| | II: air injection | | | | | | |
| 25-10-88 | | 2,900 | 81% | 4,000 | 80% | 8,800 | 41% |

Conclusion: Especially in the deeper part the air injection results in promoting the degradation of oil components

Example II

Effect washing on extraction of oil and gasoline components

- laboratory test

```
    - soil contaminated with gasoline (volatile)          2,200 mg/kg
                         with oil (not volatile)          16,600 mg/kg
    - percolating with water, percolation rate            24-60 cm/d
```

- removed by washing out/extraction during 12 weeks:
  19% of the contamination, both solved in percolate and as drift layer in percolate
- concentrations of volatile and non-volatile components solved in percolate:

```
        volatile         0.35 - 10.9 mg/l
        non-volatile     0.8  -  6.8 mg/l
```

Example III

Effect liquid recirculation on the concentrations of the gasoline fraction and mineral oil fraction in the soil to be purified and recirculation water

- practice test
* 6 test compartments     $A_1$ and $A_2$ (50 cm)
                                      $B_1$ and $B_2$ (100 cm)
                                        $C_1$ and $C_2$ (50 cm)
* Clear degradation in winter season (period October '87-January '88)

Table 1. Reduction gasoline fraction (volatile components) and mineral oil fraction (non-volatile components) in the soil to be purified (concentrations in mg/kg soil)

| Mix sample | gasoline fraction | | | mineral oil fraction | | |
|---|---|---|---|---|---|---|
| from compartment | 26-10-87 | 22-1-88 | red.(%) | 26-10-87 | 22-1-88 | red(%) |
| $A_1$ | 370 | 65 | 82 | 930 | 460 | 50 |
| $A_2$ | 390 | 90 | 77 | 630 | 510 | 19 |
| $B_1$ (0-50 cm) | 310 | 150 | 52 | 2400 | 1900 | 21 |
| $B_1$ (50-100 cm) | 800 | 240 | 70 | 2500 | 1600 | 36 |
| $B_2$ (0-50 cm) | 300 | 65 | 78 | 1200 | 700 | 42 |
| $B_2$ (50-100 cm) | 610 | 380 | 38 | 1900 | 1200 | 37 |
| $C_1$ | 250 | 75 | 70 | 1200 | 1200 | 0 |
| $C_2$ | 970 | 210 | 78 | 1300 | 680 | 48 |

Conclusion: in winter season approximately 70% reduction volatile
            components (gasoline)
            approximately 30% reduction non-volatile
            components (mineral oil)
* recirculation water and purification recirculation water
(biologically)

Table 2. Concentrations in recirculation water before and after the water purification

| recirculation water | gasoline-comp. (mg/l) | mineral oil comp. (mg/l) |
|---|---|---|
| before purification | 6.5-41 | 1.8-6.3 |
| after purification | ≤0.05 | 3.4 |

Example IV

Effect air withdrawal on the concentration of the volatile fraction and less volatile fraction in a soil contaminated artificially with gasoline.

- laboratory test
    . soil contaminated with 10 g gasoline per kg soil. Gasoline consists of approximately 50% of volatile substances and 50% of less volatile substances.

. column with a total height of 120 cm, diameter of 23 filled with 80 kg contaminated gasoline (800 g)
. debit of the air withdrawal 60 l/h (upflow)
. final result after 15 days air withdrawal

```
mix sample * upper part (0 - 45 cm) volatile          100 mg/kgds
                                     less volatile     940 mg/kgds
           * bottom part (65 - 120 cm)   volatile    ≤  20 mg/kgds
                                 less volatile         160 mg/kgds
```

The overall removal during 15 days was above 90%.

## Claims

1. A process for the treatment of contaminated soil, wherein the soil to be treated is brought onto an impermeable base in a deposit, in a layer of a thickness of 1 to 2 m, water or recirculated water if desired with added nutrients is spread over the soil and from the bottom of the depot water is withdrawn from the soil by means of a drain system, characterized in that the water withdrawn from the soil is subjected to a biological and/or physical chemical cleaning, an excess of water, if any, is withdrawn and the remainder is supplied to the soil again.

2. The process of claim 1, characterized in that micro-organisms and/or extracts or detergents are supplied to the recirculated water.

3. The process of claim 1 or 2, characterized in that nitrogen and/or phosphate and/or further nutrients are supplied to the recirculated water.

4. The process of any of claims 1 to 3, characterized in that the soil to be cleaned is covered.

5. The process of any of claims 1 to 4, characterized in that the soil is periodically worked.

6. The process of any of claims 1 to 5, characterized in that air is injected or is withdrawn from the soil.

7. The process of claims 1 to 6, characterized in that air is supplied or withdrawn during the decomposition of biologically degradable contaminants.

8. The process according to any of claims 1 to 7, characterized in that nitrogen and/or phosphate and/or further nutrients are supplied to the recirculated liquid.

9. The process of claim 8, characterized in that dung, compost or mud is added to the soil to be purified.

10. The process of any of claims 1 to 9, characterized in that air is supplied during the extraction and the decomposition of the contaminants.

11. The process of any of claims 1 to 10, characterized in that an oxidant is supplied to the circulation water.

12. The process of any of claims 1 to 11, characterized in that the air which is withdrawn from the soil is biologically treated, simultaneously with the withdrawn water in a combined water/air treatment unit.

## Patentansprüche

1. Verfahren zur Erdbodenreinigung, wobei der zu behandelnde Erdboden auf eine undurchlässige Bodenfläche in einer Lagerstätte, in einer Schicht von einer Dicke von 1 bis 2 m, gebracht wird, Wasser oder rezirkuliertes Wasser, wenn gewünscht mit hinzugefügten Nährstoffen, über den Erdboden gesprüht und von dem Boden des Lagerplatzes Wasser aus dem Erdboden mit Hilfe eines Ablaufsystems abgezogen wird, dadurch gekennzeichnet, daß das aus dem Erdboden abgezogene Wasser einem biologischen und-

/oder physikalisch chemischen Reinigen unterworfen wird, ein Übermaß an Wasser, wenn überhaupt welches, abgezogen wird, und der Rest wieder dem Erdboden zugeführt wird.

2. Verfahren nach Anspruch 1, dadurch gekennzeichnet, daß Mikro-Organismen und/oder Extraktstoffe oder Reinigungsmittel dem rezirkulierten Wasser hinzugefügt werden.

3. Verfahren nach Anspruch 1 oder 2, dadurch gekennzeichnet, daß Stickstoff und/oder Phosphat und/oder weitere Nährstoffe dem rezirkulierten Wasser hinzugefügt werden.

4. Verfahren nach einem der Ansprüche 1 bis 3, dadurch gekennzeichnet, daß der zu reinigende Erdboden überdeckt ist.

5. Verfahren nach einem der Ansprüche 1 bis 4, dadurch gekennzeichnet, daß der Erdboden periodisch bearbeitet wird.

6. Verfahren nach einem der Ansprüche 1 bis 5, dadurch gekennzeichnet, daß Luft injiziert oder aus dem Erdboden abgezogen wird.

7. Verfahren nach einem der Ansprüche 1 bis 6, dadurch gekennzeichnet, daß Luft zugeführt oder während des Abbaus von biologisch abbaubaren Verunreinigungen abgezogen wird.

8. Verfahren nach einem der Ansprüche 1 bis 7, dadurch gekennzeichnet, daß Stickstoff und/oder Phosphat und/oder weitere Nährstoffe der rezirkulierten Flüssigkeit hinzugeführt werden.

9. Verfahren nach Anspruch 8, dadurch gekennzeichnet, daß Düngemittel, Kompost oder Schlamm dem zu reinigenden Erdboden hinzugefügt wird.

10. Verfahren nach einem der Ansprüche 1 bis 9, dadurch gekennzeichnet, daß Luft während der Extraktion und des Abbaus der Verunreinigungen hinzugefügt wird.

11. Verfahren nach einem der Ansprüche 1 bis 10, dadurch gekennzeichnet, daß ein Oxydationsmittel dem Zirkulationswasser hinzugefügt wird.

12. Verfahren nach einem der Ansprüche 1 bis 11, dadurch gekennzeichnet, daß Luft, die aus dem Erdboden abgezogen wird, gleichzeitig mit dem abgezogenen Wasser in einer kombinierten Wasser-/Luftbehandlungseinheit biologisch behandelt wird.

## Revendications

1. Procédé de traitement de sol contaminé, dans lequel le sol devant être traité est emmené sur une base imperméable dans un dépôt, en une couche d'une épaisseur de 1 à 2 m, de l'eau ou de l'eau remise en circulation si nécessaire avec des agents nutritifs ajoutés est pulvérisée sur le sol et l'eau est extraite du sol au fond du dépôt au moyen d'un système de drainage, caractérisé en ce que l'eau extraite du sol est soumise à un nettoyage chimique biologique et/ou physique, un excès d'eau, s'il y en a, est extrait et le reste est renvoyé dans le sol.

2. Procédé selon la revendication 1, caractérisé en ce que des micro-organismes et/ou des extraits ou des détergents sont apportés dans l'eau remise en circulation.

3. Procédé selon la revendication 1 ou 2, caractérisé en ce que de l'azote et/ou du phosphate et/ou d'autres agents nutritifs sont apportés dans l'eau remise en circulation.

4. Procédé selon l'une quelconque des revendications 1 à 3, caractérisé en ce que le sol devant être nettoyé est recouvert.

5. Procédé selon l'une quelconque des revendications 1 à 4, caractérisé en ce que le sol est travaillé périodiquement.

6. Procédé selon l'une quelconque des revendications 1 à 5, caractérisé en ce que de l'air est injecté ou extrait du sol.

7. Procédé selon les revendications 1 à 6, caractérisé en ce que de l'air est apporté ou extrait pendant la décomposition de produits contaminants biologiquement dégradables.

8. Procédé selon l'une quelconque des revendications 1 à 7, caractérisé en ce que de l'azote et/ou du phosphate et/ou d'autres agents nutritifs sont apportés dans le liquide remis en circulation.

9. Procédé selon la revendication 8, caractérisé en ce que du fumier, du compost ou de la boue est ajouté au sol devant être purifié.

10. Procédé selon l'une quelconque des revendications 1 à 9, caractérisé en ce que de l'air est apporté pendant l'extraction et la décomposition des produits contaminants.

11. Procédé selon l'une quelconque des revendications 1 à 10, caractérisé en ce que un oxydant est apporté dans l'eau en circulation.

12. Procédé selon l'une quelconque des revendications 1 à 11, caractérisé en ce que l'air qui est extrait du sol est traité biologiquement, de manière simultanée avec l'eau extraite dans une unité de traitement combinée eau/air.

fig-1

CONTAMINATED SOIL

DRAIN SAND LAYER FOIL

AIR INJECTION TUBE/
/AIR WITHDRAWAL TUBE

fig-2

MICRO ORGANISMS

DETERGENT/
EXTRACTANT

NUTRIENTS

RAINING/IRRIGATION

SOIL TO BE CLEANED

CENTRAL
OUTLET
RECIRCULATION
LIQUID

WASTE

PURIFICATION
INSTALLATION

SAND LAYER WITH DRAIN
SYSTEM AND AIR SUPPLY SYSTEM/

AIR INJECTION/
/AIR WITHDRAWAL

/AIR DISCHARGE SYSTEM

fig-3

AIR SUPPLY ⌐SOIL TO BE CLEANED

AIR PURIFICATION

SAND LAYER WITH
AIR WITHDRAWAL
SYSTEM

AIR WITHDRAWAL

9